# EUROPÄISCHE PATENTSCHRIFT

(11) **EP 2 783 128 B1**
(45) Veröffentlichungstag und Bekanntmachung des Hinweises auf die Patenterteilung: **26.08.2015**
(21) Anmeldenummer: 12786868.5
(22) Anmeldetag: 29.10.2012
(51) Int. Cl.: F16D 3/12, F16F 15/134, F16F 15/131

(54) **DREHSCHWINGUNGSDÄMPFUNGSANORDNUNG, INSBESONDERE FÜR DEN ANTRIEBSSTRANG EINES FAHRZEUGS**
TORSIONAL VIBRATION DAMPER ASSEMBLY, IN PARTICULAR FOR THE DRIVE TRAIN OF A MOTOR VEHICLE
ENSEMBLE AMORTISSEUR DE VIBRATIONS TORSIONNELLES, EN PARTICULIER POUR LA CHAÎNE CINÉMATIQUE D'UN VÉHICULE

(30) Priorität: 23.11.2011 DE 102011086982
(43) Veröffentlichungstag der Anmeldung: 01.10.2014
(73) Patentinhaber: ZF Friedrichshafen AG, 88038 Friedrichshafen (DE)
(72) Erfinder: LORENZ, Daniel, 97688 Bad Kissingen (DE); WEIGAND, Thomas, 97421 Schweinfurt (DE); KOPP, Mathias, 96050 Bamberg (DE)
(86) Internationale Anmeldenummer: PCT/EP2012/071335
(87) Internationale Veröffentlichungsnummer: WO 2013/075908

(56) Entgegenhaltungen:
- DE-A1- 3 139 658
- DE-A1- 10 312 785
- DE-A1- 19 919 458
- DE-A1-102008 034 557
- DE-A1-102009 035 914
- US-A1- 2009 203 479

## Beschreibung

Die vorliegende Erfindung betrifft eine Drehschwingungsdämpfungsanordnung, insbesondere für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomenttübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der nachveröffentlichten deutschen Patentanmeldung DE 10 2011 007 118.0 ist eine Drehschwingungsdämpfungsanordnung bekannt, welche das in einen Eingangsbereich beispielsweise durch eine Kurbelwelle einer Brennkraffimaschine eingeleitete Drehmoment in einen über einen ersten Drehmomentübertragungsweg übertragenen Drehmomentenanteil und einen über einen zweiten Drehmomentübertragungsweg geleiteten Drehmomentenanteil aufteilt. Bei dieser Drehmomentenaufteilung wird nicht nur ein statisches Drehmoment aufgeteilt, sondern auch die im zu übertragenen Drehmoment enthaltenen Schwingungen bzw. Drehungleichförmigkeiten, beispielsweise generiert durch die periodisch auftretenden Zündungen in einer Brennkraftmaschine, werden anteilig auf die beiden Drehmomentübertragungswege aufgeteilt. In einer als Planetengetriebe ausgebildeten Koppelanordnung werden die über die beiden Drehmomentübertragungswege übertragenen Drehmomentenanteile wieder zusammengeführt und dann als ein Gesamtdrehmoment in den Ausgangsbereich, beispielsweise eine Reibungskupplung oder dergleichen, eingeleitet.

In zumindest einem der Drehmomentübertragungswege ist eine Phasenschieberanordnung vorgesehen, welche nach Art eines Schwingungsdämpfers, also mit einer Primärseite und einer durch die Kompressibilität einer Federanordnung bezüglich dieser drehbaren Sekundärseite, aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentenanteilen enthaltenen und bezüglich einander dann phasenverschobenen Schwingungsanteile einander destruktiv überlagert werden, so dass im Idealfall das in den Ausgangsbereich eingeleitete Gesamtdrehmoment einem ein im Wesentlichen keine Schwingungsanteile enthaltenes statisches Drehmoment ist.

Eine weitere Vorrichtung dieser Art zeigt die US 2009/0203479.

Es ist die Aufgabe der vorliegenden Erfindung, eine Drehschwingungsdämpfungsanordnung vorzusehen, welche bei einfachem Aufbau ein verbessertes Schwingungsdämpfungsverhalten aufweist.

Erfindungsgemäß wird diese Aufgabe gelöst durch eine Drehschwingungsdämpfungsanordnung, insbesondere für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist, wobei die Koppelanordnung eine Koppelhebelanordnung umfasst.

Während bei dem vorangehend erläuterten Stand der Technik die Koppelanordnung ein vergleichsweise komplex aufgebautes Planetengetriebe umfasst, wird bei dem erfindungsgemäßen Aufbau eine Zusammenführung der über die beiden Drehmomentübertragungswege geleiteten Drehrnomentenanteile durch einer Koppelhebelanordnung realisiert. Eine derartige Hebelanordnung ist von vergleichsweise einfachem, gleichwohl jedoch stabilem Aufbau. Ferner hat eine Hebelanordnung den Vorteil, dass bei Verschwenkung eines involvierten Hebels um eine Schwenkachse im Allgemeinen dessen effektive Hebellänge sich verändert. Diese Veränderung effektiver Hebellängen wird bei Integration dieser Funktionalität in eine Koppelanordnung dazu nutzbar, eine Anpassung an verschiedene Lastzustände durch Veränderung des Hebelverhältnisses und damit auch Änderung des Übersetzungsverhältnisses der Koppelhebelanordnung zu erreichen.

Um in einfacher Art und Weise die Phasenverschiebung in einem der Drehmomentübertragungswege erlangen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst. Ein derartiges Schwingungssystem kann also nach Art eines an sich bekannten Schwingungsdämpfers aufgebaut sein, bei dem insbesondere durch Beeinflussung der primärseitigen Masse und der sekundärseitigen Masse bzw. auch der Steifigkeit der Federanordnung die Resonanzfrequenz des Schwingungssystems definiert eingestellt werden kann und damit auch festgelegt werden kann, bei welcher Frequenz ein Übergang in den überkritischen Zustand auftritt.

Die Koppelhebelanordnung kann einen Verbindungshebelträger umfassen, wobei wenigstens ein Verbindungshebel in einem ersten Verbindungshebelkopplungsbereich mit dem Verbindungshebelträger schwenkbar gekoppelt ist. Dieser Verbindungshebelträger kann beispielsweise in den zweiten Drehmomentübertragungsweg integriert sein bzw. die Aufzweigung zwischen erstem Drehmomentübertragungsweg und zweitem Drehmomentübertragungsweg mit definieren.

Um die Zusammenführung der über die beiden Drehmomentübertragungswege geleiteten Drehmomentenanteile unter Miteinbeziehung des wenigstens einen Verbindungshebels erlangen zu können, wird weiter vorgeschlagen, dass wenigstens ein Verbindungshebel in einem zweiten Verbindungshebelkopplungsbereich an die Sekundärseite des Schwingungssystems bezüglich dieser schwenkbar angekoppelt ist und in einem dritten Verbindungshebelkopplungsbereich an den Ausgangsbereich bezüglich diesem schwenkbar angekoppelt ist. Die Kopplung des wenigstens eines Verbindungshebels an die Sekundärseite des Schwingungssystems oder/und den Ausgangsbereich kann dabei direkt realisiert sein, also ohne der Zwischenlagerung weiterer Verbindungsglieder, wie z. B. weiterer Hebelelemente. Alternativ kann insbesondere zum Kompensieren von Umfangsrelativbewegungen verschiedener Kopplungsbereiche vorgesehen sein, dass wenigstens ein Antriebshebel in einem ersten Antriebshebelkopplungsbereich mit der Sekundärseite des Schwingungssystems schwenkbar gekoppelt ist und in einem zweiten Antriebshebelkopplungsbereich mit einem Verbindungshebel in dessen zweiten Verbindungshebelkopplungsbereich schwenkbar gekoppelt ist. Auch abtriebsseitig kann die Anbindung des wenigstens einen Verbindungshebels an den Ausgangsbereich mittelbar erfolgen, nämlich dadurch, dass wenigstens ein Abtriebshebel in einem ersten Abtriebshebelkopplungsbereich mit dem Ausgangsbereich schwenkbar gekoppelt ist und in einem zweiten Abtriebshebelkopplungsbereich mit einem Verbindungshebel in dessen dritten Verbindungshebelkopplungsbereich schwenkbar gekoppelt ist.

Zur Vorgabe eines auch die Aufteilung der Drehmomentenanteile auf die beiden Drehmomentübertragungswege beeinflussenden Übersetzungsverhältnisses der Koppelhebelanordnung wird vorgeschlagen, dass bei wenigstens einem Verbindungshebel der zweite Verbindungshebelkopplungsbereich und der dritte Verbindungshebelkopplungsbereich zueinander unterschiedliche Abstände zum ersten Verbindungshebelkopplungsbereich aufweisen. Die Auswahl der jeweiligen Abstände beeinflusst durch die damit einhergehenden Hebellängen die Übersetzung der als Hebelgetriebe wirksamen Hebelanordnung.

Dabei kann beispielsweise vorgesehen sein, dass der Abstand des zweiten Verbindungshebelkopplungsbereichs zum ersten Verbindungshebelkopplungsbereich größer ist als der Abstand des dritten Verbindungshebelkopplungsbereichs zum ersten Verbindungshebelkopplungsbereich. Um im Betrieb auch lastabhängig eine weitere Beeinflussung des Übersetzungsverhältnisses bzw. der Hebelverhältnisse erlangen zu können, wird weiter vorgeschlagen, dass bei wenigstens einem Verbindungshebel ein zweiter Verbindungshebelkopplungsbereich oder/und ein dritter Verbindungshebelkopplungsbereich vorzugsweise gegen eine Vorspannkraft in Richtung auf den ersten Verbindungshebelkopplungsbereich zu oder/und von dem ersten Verbindungshebelkopplungsbereich weg bewegbar ist.

Eine kompakte Bauart kann dadurch erhalten werden, dass die Koppelhebelanordnung wenigstens bereichsweise radial außerhalb oder innerhalb der Federanordnung angeordnet ist oder/und sich wenigstens teilweise mit der Federanordnung axial überlappend angeordnet ist.

Durch die Ausgestaltung des Schwingungssystems wird es möglich, die Lage der Resonanzfrequenz desselben und somit im Wesentlichen auch den Übergang in den überkritischen Zustand zu beeinflussen. Hierzu kann beispielsweise vorgesehen sein, dass die Federanordnung einen ersten Federsatz mit in Umfangsrichtung aufeinander folgend angeordneten und bezüglich der Primärseite und einer Zwischenmasse abstützbaren Federeinheiten und einen zweiten Federsatz mit in Umfangsrichtung aufeinander folgenden und bezüglich der Zwischenmasse und der Sekundärseite abstützbaren Federeinheiten umfasst. Hier sind also im Wesentlichen zwei seriell zueinander wirksame Schwingungssystembereiche vorhanden, von welchen jeder letztendlich als eigenes Teilschwingungssystem, jeweils aufgebaut nach eines Torsionsschwingungsdämpfers, betrachtet werden kann.

Ferner kann beispielsweise vorgesehen sein, dass der erste Federsatz radial außerhalb des zweiten Federsatzes angeordnet ist oder/und sich mit dem zweiten Federsatz in axialer Richtung wenigstens teilweise überlappend angeordnet ist. Durch diese radiale Staffelung und ggf. axiale Überlappung wird eine kompakte Bauweise unterstützt.

Bei einem alternativen Aufbau wird vorgeschlagen, dass die Federanordnung einen Federsatz mit in Umfangsrichtung aufeinander folgenden und bezüglich der Primärseite und der Sekundärseite abstützbaren Federeinheiten umfasst.

Die vorliegende Erfindung wird nachfolgend mit Bezug auf die beiliegenden Figuren detailliert beschrieben. Es zeigt:
- Fig. 1: eine teilweise aufgeschnitten dargestellte Axialansicht einer Drehschwingungsdämpfungsanordnung einer ersten Ausgestaltungsform;
- Fig. 2: eine Teil-Längsschnittansicht der Drehschwingungsdämpfungsanordnung der Fig. 1, geschnitten längs einer Linie II-II in Fig. 1;
- Fig. 3: eine Teil-Längsschnittansicht der Drehschwingungsdämpfungsanordnung der Fig. 1, geschnitten längs einer Linie III-III in Fig. 1;
- Fig. 4: eine Teil-Längsschnittansicht der Drehschwingungsdämpfungsanordnung der Fig. 1, geschnitten längs einer Linie IV-IV in Fig. 1;
- Fig. 5: eine perspektivische Darstellung einer Koppelhebelanordnung der Drehschwingungsdämpfungsanordnung der Fig. 1;
- Fig. 6: einen Verbindungshebel der Koppelhebelanordnung der Fig. 5 mit einem Antriebshebel und einem Abtriebshebel;
- Fig. 7: eine der Fig. 6 entsprechende Darstellung mit einem alternativ ausgestalteten Verbindungshebel;
- Fig. 8: eine Längsschnittansicht einer Drehschwingungsdämpfungsanordnung gemäß Fig. 1 mit einem Verbindungshebel der Fig. 7:
- Fig. 9: eine Axialansicht einer Koppelhebelanordnung mit Verbindungshebeln gemäß Fig. 7;
- Fig. 10: eine der Fig. 1 entsprechende Axialansicht einer alternativ ausgestalteten Drehschwingungsdämpfungsanordnung;
- Fig. 11: eine perspektivische Ansicht der Drehschwingungsdämpfungsanordnung der Fig. 10;
- Fig. 12: eine Längsschnittansicht der Drehschwingungsdämpfungsanordnung der Fig. 10, geschnitten längs einer Linie XII-XII in Fig. 10;
- Fig. 13: eine Längsschnittansicht der Drehschwingungsdämpfungsanordnung der Fig. 10, geschnitten längs einer Linie XIII-XIII in Fig. 10;
- Fig. 14: eine Längsschnittansicht der Drehschwingungsdämpfungsanordnung der Fig. 10, geschnitten längs einer Linie XIV-XIV in Fig. 10;
- Fig. 15: in perspektivischer Darstellung eine Koppelhebelanordnung der Drehschwingungsdämpfungsanordnung der Fig. 10;
- Fig. 16: eine weitere perspektivische Darstellung der Koppelhebelanordnung der Drehschwingungsdämpfungsanordnung der Fig. 10;
- Fig. 17: eine Prinzipdarstellung, welche den Aufbau und das Funktionsprinzip einer Drehschwingungsdämpfungsanordnung gemäß den Fig. 1 bis 16 veranschaulicht;
- Fig. 18: eine der Fig. 17 entsprechende Prinzipdarstellung mit anderer konstruktiver Ausführung;
- Fig. 19: eine der Fig. 17 entsprechende Prinzipdarstellung mit anderer konstruktiver Ausführung.

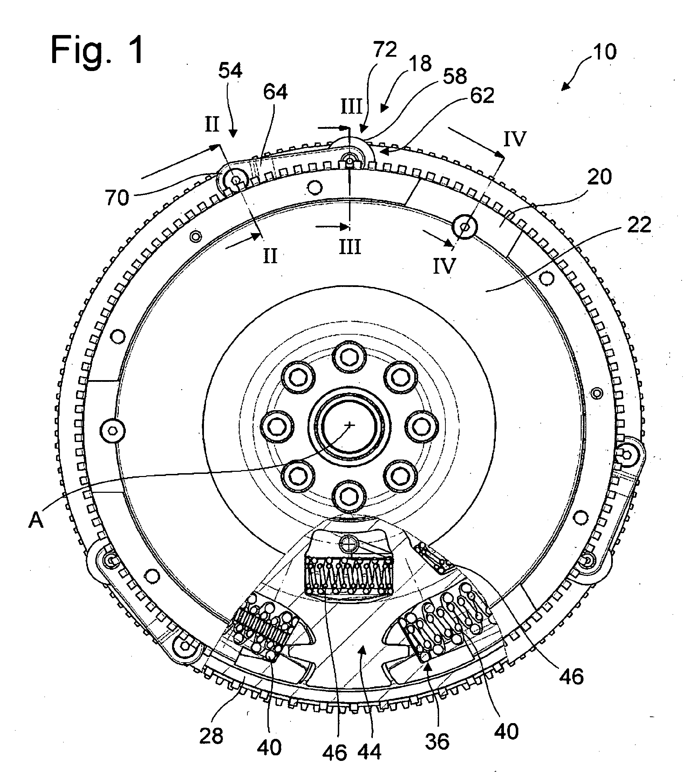

Mit Bezug auf die Fig. 1 bis 6 wird nachfolgend eine erste Ausgestaltungsform einer allgemein mit 10 bezeichneten Drehschwingungsdämpfungsanordnung beschrieben, welche nach dem Prinzip der Leistungs- bzw. Drehmomentenaufzweigung arbeitet. Die Drehschwingungsdämpfungsanordnung 10 kann in einem Antriebsstrang beispielsweise eines Fahrzeugs zwischen einem Antriebsaggregat, also beispielsweise einer Brennkraftmaschine und dem folgenden Teil des Antriebsstrangs, also beispielsweise einer Reibungskupplung, einem hydrodynamischen Drehmomentwandler oder dergleichen, angeordnet werden.

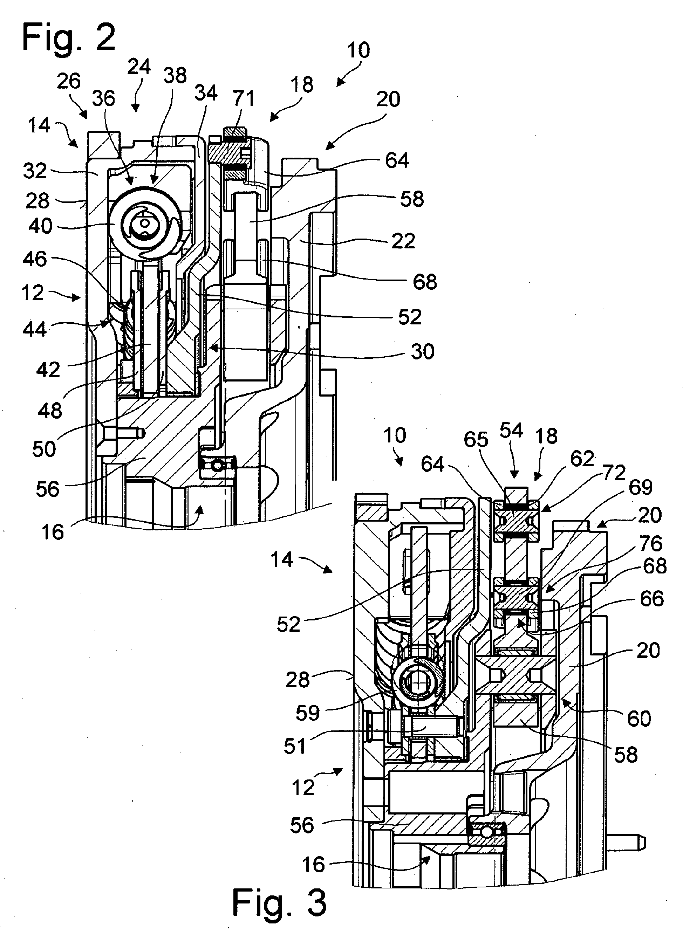

Die in den Fig. 2 bis 4 im Längsschnitt dargestellte Drehschwingungsdämpfungsanordnung 10 umfasst einen allgemein mit 12 bezeichneten Eingangsbereich. Dieser Eingangsbereich 12 kann beispielsweise durch Verschraubung an eine Kurbelwelle einer Brennkraftmaschine angebunden werden. Im Eingangsbereich 12 zweigt das von einem Antriebsaggregat aufgenommene Drehmoment in einen ersten Drehmomentübertragungsweg 14 und einen zweiten Drehmomentübertragungsweg 16 auf. Im Bereich einer allgemein mit 18 bezeichneten Koppelanordnung werden die über die beiden Drehmomentübertragungswege 14, 16 geleiteten Drehmomentenanteile wieder zusammengeführt und dann zu einem Ausgangsbereich 20 weitergeleitet, welcher im dargestellten Beispiel ein Schwungrad 22 einer Reibungskupplung umfasst.

In den ersten Drehmomentübertragungsweg 14 ist ein allgemein mit 24 bezeichnetes Schwingungssystem integriert. Das Schwingungssystem 24 ist als Phasenschieberanordnung 26 wirksam und umfasst eine beispielsweise an das Antriebsaggregat anzubindende Primärseite 28 sowie eine das Drehmoment weiterleitende Sekundärseite 30. Die Primärseite 28 ist mit zwei Deckscheibenelementen 32, 34 aufgebaut. Diese umschließen nach radial außen hin im Wesentlichen vollständig einen Raumbereich, in welchem ein erster Federsatz 36 einer allgemein mit 38 bezeichneten Federanordnung aufgenommen ist. Der erste Federsatz 36 umfasst eine Mehrzahl von in Umfangsrichtung aufeinander folgenden und ggf. auch ineinander geschachtelt angeordneten Federeinheiten 40, wobei jede Federeinheit 40 vorzugsweise wenigstens eine Schraubendruckfeder umfasst. Die Federeinheiten 40 des ersten Federsatzes 36 stützen sich bezüglich der Primärseite 28 einerseits und einer als Zentralscheibe ausgebildeten Zwischenmasse 42 andererseits ab. Radial innerhalb des ersten Federsatzes 36 ist ein zweiter Federsatz 44 angeordnet. Auch dieser umfasst eine Mehrzahl von in Umfangsrichtung aufeinander folgenden und ggf. ineinander geschachtelten Federeinheiten 46, jede vorzugsweise mit wenigstens einer Schraubendruckfeder ausgebildet. Die Federeinheiten 46 des zweiten Federsatzes 44 stützen sich bezüglich der als Zentralscheibe ausgebildeten Zwischenmasse 42 einerseits und zwei beidseits davon angeordneten Deckscheibenelementen 48, 50 andererseits ab. Diese beiden Deckscheibenelemente 48, 50 stellen in Verbindung mit einem damit beispielsweise durch Schraubbolzen 51 fest verbundenen Scheibenteil 52 im Wesentlichen die Sekundärseite des Schwingungssystems 24 bereit.

Aus der vorangehenden Beschreibung wird erkennbar, dass das Schwingungssystem 24 zwei radial ineinander geschachtelte und einander im Wesentlichen axial vollständig überlappende Schwingungssystembereiche umfasst, von welchen jeder nach Art eines Torsionsschwingungsdämpfers ausgebildet ist. Die Primärseite des im Momentenfluss ersten Schwingungssystembereichs, welcher den ersten Federsatz 36 umfasst, stellt im Wesentlichen auch die Primärseite 28 des Schwingungssystems 24 bereit, während die Sekundärseite des im Drehmomentenfluss zweiten Schwingungssystembereichs, welcher den zweiten Federsatz 44 umfasst, im Wesentlichen die Sekundärseite 30 des Schwingungssystems 24 bereitstellt. Durch Auswahl der Massen der Primärseite 28, der Sekundärseite 30 und auch der Zwischenmasse 42 sowie auch der Steifigkeiten der Federsätze 36, 44 wird es möglich, die Resonanzfrequenz des Schwingungssystems 24 in einen gewünschten Bereich zu legen.

Es sei hier darauf hingewiesen, dass selbstverständlich das Schwingungssystem 24 auch mit nur einem einzigen Federsatz ausgebildet sein kann, die Federanordnung 38 also nur einen Federsatz aufweisen kann, in welchem dann mehrere Federeinheiten in Umfangsrichtung aufeinander folgend angeordnet sind.

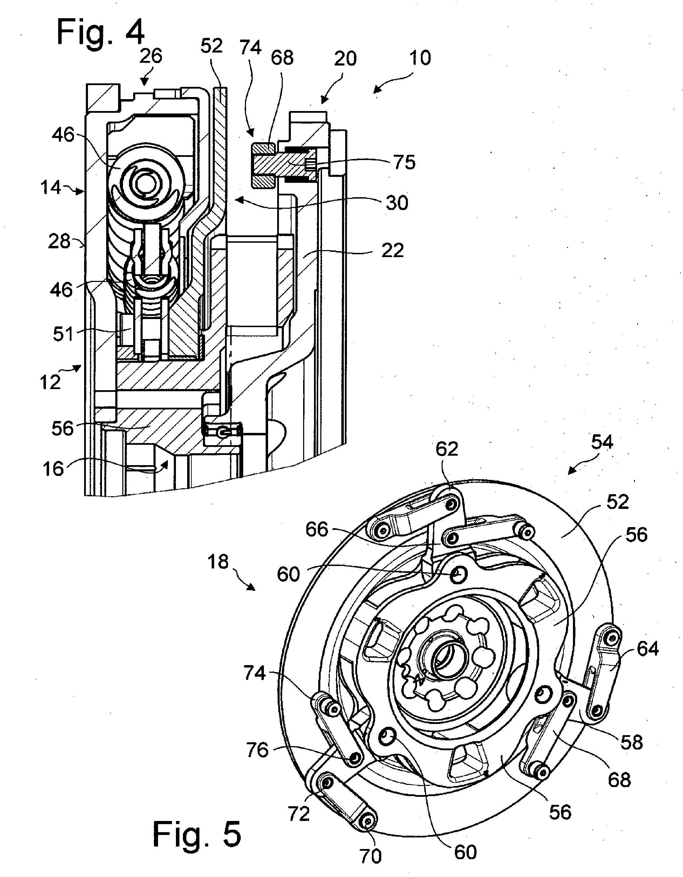

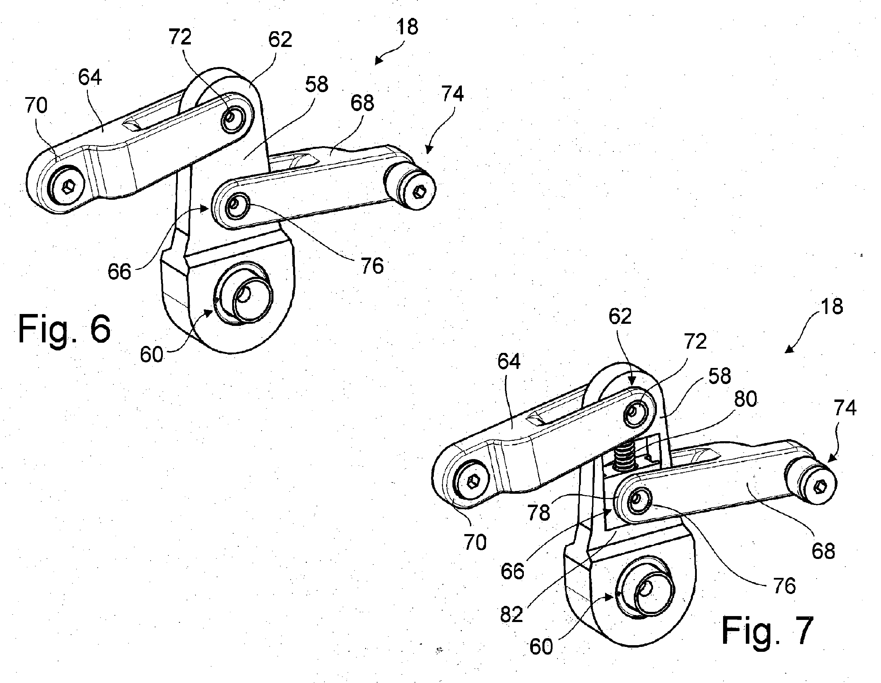

Die Koppelanordnung 18 der Drehschwingungsdämpfungsanordnung 10 ist als Koppelhebelanordnung 54 ausgebildet. Wie die Fig. 5 und 6 dies zeigen, umfasst die Koppelhebelanordnung einen ringartig ausgebildeten Verbindungshebelträger 56, welcher in seinem radial inneren Bereich das Schwingungssystem 24 axial übergreift und mit der Primärseite 28 durch Verschraubung fest verbunden ist bzw. mit dieser zusammen z. B. an eine Kurbelwelle angeschraubt ist. Am Verbindungshebelträger 56 sind im dargestellten Beispiel in einem Winkelabstand von 120° drei Verbindungshebel 58 in einem jeweiligen ersten Verbindungshebelkopplungsbereich 60 schwenkbar getragen. Dazu können die Verbindungshebel 58 mit ihrem radial inneren Bereich in entsprechende Aussparungen des Verbindungshebelträgers 56 eingesetzt werden und vermittels Schwenkbolzen 59 oder dergleichen schwenkbar mit dem Verbindungshebelträger 56 gekoppelt werden. In einem radial äußeren Bereich weisen die Verbindungshebel 58 einen zweiten Verbindungshebelkopplungsbereich 62 auf, in welchem die Verbindungshebel 58 jeweils mit einem näherungsweise in Umfangsrichtung sich erstreckenden Antriebshebel 64 durch Schwenkbolzen 65 schwenkbar gekoppelt sind. Zwischen dem ersten Verbindungshebelkopplungsbereich 60 und dem zweiten Verbindungshebelkopplungsbereich 62 weisen die Verbindungshebel 58 jeweils einen dritten Verbindungshebelkopplungsbereich 66 auf. Dort ist jeweils ein Abtriebshebel 68 vermittels eines Schwenkbolzens 69 schwenkbar mit dem Verbindungshebel 58 gekoppelt.

Die Antriebshebel 64 sind in einem jeweiligen ersten Antriebshebelkopplungsbereich 70 durch Schwenkbolzen 71 schwenkbar mit dem mit der Sekundärseite 30 verbundenen bzw. dieser zuzurechnenden Scheibenteil 52 gekoppelt. In ihrem anderen Umfangsbereich weisen die Abtriebshebel 64 einen zweiten Abtriebshebelkopplungsbereich 72 auf, in welchem sie mit dem jeweils zugeordneten Verbindungshebel 58 in dessen zweiten Verbindungshebelkopplungsbereich 62 vermittels der Schwenkbolzen 65 schwenkbar gekoppelt sind.

Die Abtriebshebel 68 weisen in ihrem vom Verbindungshebel 58 entfernten Umfangsendbereich einen ersten Abtriebshebelkopplungsbereich 74 auf. In diesem sind die Abtriebshebel 68 durch Schwenkbolzen 75 schwenkbar an den Ausgangsbereich 20, also beispielsweise das Schwungrad 22, angekoppelt. In ihrem dem Verbindungshebel 58 nahen Endbereich weisen die Abtriebshebel 68 einen zweiten Abtriebshebelkopplungsbereich 76 auf. Dort sind die Abtriebshebel 68 mit dem zugeordneten Verbindungshebel 58 in dessen dritten Verbindungshebelkopplungsbereich 66 vermittels der Schwenkbolzen 69 schwenkbar gekoppelt.

Man erkennt insbesondere in Fig. 6, dass die Antriebshebel 64 und die Abtriebshebel 68 jeweils gabelartig ausgebildet sind, und somit den Verbindungshebel in dessen zweiten Verbindungshebelkopplungsbereich 62 bzw. dritten Verbindungshebelkopplungsbereich 66 gabelartig umgreifen. Die Kopplung der verschiedenen Hebel, also Verbindungshebel 58, Antriebshebel 64 und Abtriebshebel 68 miteinander bzw. anderen Baugruppen kann zum Vermindern der Reibeffekte unter Einsatz der Schwenkbolzen, von Wälzlagern oder Gleitlagern erfolgen. Die Schwenkverkopplung kann unter Einsatz der Schwenkbolzen einer jeweiligen Verschraubung, einer Vernietung oder Verstemmung erfolgen. Grundsätzlich sollten die verschiedenen Hebel bezüglich der mit diesen jeweils gekoppelten Bauteile möglichst reibungsarm im erforderlichen Schwenkwinkelbereich verschwenken können.

Im Drehmomentübertragungsbetrieb wird das in den Eingangsbereich eingeleitete Drehmoment über die beiden Drehmomentübertragungswege 14, 16 übertragen. Die jeweils über diese Drehmomentübertragungswege 14,16 geleiteten Drehmomentenanteile werden im Bereich der Koppelanordnung 18 wieder zusammengeführt. Ein statisches, also keine Ungleichförmigkeiten aufweisendes bzw. nicht von Schwingungen überlagertes Drehmoment wird grundsätzlich nicht zu einer schwingenden Relativbewegung zwischen der Primärseite 28 und der Sekundärseite 30 des Schwingungssystems 24 führen. Dies bedeutet, dass auch der Verbindungshebelträger 56 und das Scheibenteil 52 keine schwingenden Relativbewegung bezüglich einander ausführen werden. Es wird jedoch, bedingt durch den über den ersten Drehmomentübertragungsweg 14 geleiteten Drehmomentenanteil, eine Kompression der Federeinheiten 40, 46 hervorgerufen, was eine der Größe des zu übertragenden statischen Drehmoments entsprechenden Verschwenkung der Verbindungshebel 58 um ihren jeweiligen ersten Verbindungshebelkopplungsbereich 60 am Verbindungshebelträger 56 zur Folge hat. Dies bedeutet, dass beispielsweise ausgehend von einer im unbelasteten Zustand vorhandenen näherungsweise radialen Orientierung der Verbindungshebel 58 bezüglich einer Drehachse A der Drehschwingungsdämpfungsanordnung 10 die Verbindungshebel 58 in eine dem Lastzustand entsprechende Stellung verschwenken werden. In dieser Verschwenkstellung verbleiben die Verbindungshebel 58, so lange dem statischen Drehmoment kein oszillierendes Drehmoment überlagert wird.

Die grundsätzlich bei Einsatz einer Brennkraftmaschine unvermeidbaren Oszillationen des Drehmoments, welche dem statischen Drehmoment überlagert sind, führen dazu, dass die Verbindungshebel um die vorangehend angesprochene Schwenkstellung, die abhängig vom Lastzustand bzw. vom zu übertragenden statischen Drehmoment eingenommen wird, oszillieren werden, da die Primärseite 28 des Schwingungssystems 24 und mit dieser die Komponenten des zweiten Drehmomentübertragungswegs 16 bezüglich der Sekundärseite 30 eine Oszillationsbewegung ausführen werden. Im Idealfalle oszillieren diese beiden Systembereiche im überkritischen Zustand des Schwingungssystems 24 zueinander gegenphasig, was bewirkt, dass unbeachtlich der grundsätzlich vorhandenen Rotationsbewegung um die Drehachse A, die Verbindungshebel 58 näherungsweise um ihren jeweiligen dritten Verbindungshebelkopplungsbereich 66 hin und her verschwenken werden. Dies bedeutet beispielsweise in Fig. 6, dass bei durch die Oszillationsbewegung hervorgerufener Bewegung des zweiten Verbindungshebelkopplungsbereichs 62 nach links, also im Gegenuhrzeigersinn, der erste Verbindungshebelkopplungsbereich 60 sich nach rechts, also gleichermaßen im Uhrzeigersinn bewegen wird, während der dritte Verbindungshebelkopplungsbereich 66 im Wesentlichen seine Position beibehält, wie bereits ausgeführt, selbstverständlich jeweils überlagert von der grundsätzlich vorhandenen Rotationsbewegung. Dies hat zur Folge, dass das in den Verbindungshebeln 58 zusammengeführte Drehmoment über die dritten Verbindungshebelkopplungsbereiche 66 bzw. die zweiten Abtriebshebelkopplungsbereiche 76 als im Wesentlichen schwingungsfreies Gesamtmoment in die Abtriebshebel 68 eingeleitet wird. Durch die Vorgabe der radialen Positionierung des dritten Verbindungshebelkopplungsbereichs 66 zwischen dem ersten Verbindungshebelkopplungsbereich 60 und dem zweiten Verbindungshebelkopplungsbereich 62 wird es dabei möglich, das Übersetzungsverhältnis der Koppelhebelanordnung 18 und damit die Aufteilung der Drehmomentenanteile auf den ersten Drehmomentübertragungsweg 14 und den zweiten Drehmomentübertragungsweg 16 einzustellen. Dabei ist zu berücksichtigen, dass durch das Vorhandensein des Schwingungssystems 24 im ersten Drehmomentübertragungsweg 14 grundsätzlich bereits eine Dämpfung von Drehungleichförmigkeiten bzw. Drehmomentoszillationen auftreten wird, so dass das Übersetzungsverhältnis so gewählt werden kann, dass der größere Drehmomentenanteil in den ersten Drehmomentübertragungsweg 14 eingeleitet wird, so dass nach der im Schwingungssystem 24 bereits erfolgenden Dämpfung der in die Sekundärseite 30 phasenverschoben eingeleitete Drehmomentenanteil hinsichtlich seiner Amplitude näherungsweise dem in den zweiten Drehmomentübertragungsweg 16 eingeleiteten Drehmomentenanteil entspricht.

Durch die dargestellte Positionierung des dritten Verbindungshebelkopplungsbereichs 66 zwischen dem ersten Verbindungshebelkopplungsbereich 60 und dem zweiten Verbindungshebelkopplungsbereich 62 wird ein Übersetzungsverhältnis der Koppelhebelanordnung von größer 1 erreicht. Dies bewirkt, dass das in den Eingangsbereich eingeleitete Drehmoment so aufgeteilt wird, dass der größere Drehmomentenanteil in den ersten Drehmomentübertragungsweg 14 eingeleitet wird und der kleinere Drehmomentenanteil in den zweiten Drehmomentübertragungsweg 16 eingeleitet wird. Somit ist sichergestellt, dass nach Dämpfung von Drehungleichförmigkeiten in dem Schwingungssystem 24 an der Sekundärseite 30 einerseits und im zweiten Drehmomentübertragungsweg 16 andererseits näherungsweise Drehungleichförmigkeiten mit gleicher Amplitude vorhanden sein können.

Je näher das Übersetzungsverhältnis bei 1 liegt, desto größer ist der über den ersten Drehmomentübertragungsweg geleitete Drehmomentenanteil. Bei einem Übersetzungsverhältnis 1 würde im Wesentlichen das gesamte Drehmoment über den ersten Drehmomentübertragungsweg geleitet werden. Bei einem unter 1 liegenden Übersetzungsverhältnis (der zweite Verbindungshebelkopplungsbereich liegt näher am ersten Verbindungshebelkopplungsbereich als der dritte Verbindungshebelkopplungsbereich) würde eine Drehmomentenflussumkehr im zweiten Drehmomentübertragungsweg 16 unter Abstützung an der Koppelhebelanordnung 54 erfolgen, was zu einer entsprechenden Drehmomentenverstärkung im ersten Drehmomentübertragungsweg 14 führen würde.

Die bedingt durch das statische Moment im Lastzustand vorhandene Auslenkung der Verbindungshebel 58, in Fig. 6 im Zugzustand z. B. im Uhrzeigersinn, bewirkt, dass bei einem Übersetzungsverhältnis von größer 1 durch die beispielsweise ausgehend von einer näherungsweise radial sich erstreckenden Positionierung der Verbindungshebel 58 hervorgerufene Verschwenkung derselben im Lastzustand das Übersetzungsverhältnis abnimmt, sich also dem Wert 1 annähert. Ein abnehmendes Übersetzungsverhältnis bedingt jedoch einen zunehmenden Drehmomentenanteil im ersten Drehmomentübertragungsweg 14, so dass mit zunehmender Last die Dämpfungscharakteristik des Schwingungssystems 24 selbst verstärkt genutzt werden kann.

Die im Lastzustand hervorgerufene Verschwenkung der Verbindungshebel 58 und die damit einhergehende Veränderung des Übersetzungsverhältnisses ist abhängig davon, in welcher Richtung die Verbindungshebel 58 ausgehend von ihrer im lastfreien Zustand vorhandenen Schwenklage bezüglich des Verbindungshebelträgers 56 verschwenken. Die im Zugzustand hervorgerufene Verschwenkung in einer ersten Schwenkrichtung führt zu einer Annäherung des Übersetzungsverhältnisses an den Wert 1 von oben und somit einer Zunahme des über den ersten Drehmomentübertragungsweg 14 geleiteten Drehmomentenanteils. Die in einer entgegengesetzten zweiten Schwenkrichtung hervorgerufene Verschwenkung der Verbindungshebel 58 im Schubzustand kann zu einer Zunahme des Übersetzungsverhältnisses, also einem Entfernen von dem Wert 1 nach oben führen, was grundsätzlich eine Abnahme des über den ersten Drehmomentübertragungsweg 14 geleiteten Drehmomentenanteils zur Folge hat. Da im Schubzustand das Auftreten von Drehungleichförmigkeiten weniger kritisch ist, insbesondere auch daher, weil eine Brennkraftmaschine im Schubzustand im Allgemeinen nicht unter hoher Last betrieben wird, ist die Verringerung des über den ersten Drehmomentübertragungsweg geleiteten Drehmomentenanteils grundsätzlich für die Dämpfungscharakteristik der Drehschwingungsdämpfungsanordnung 10 nicht kritisch.

Durch die vorangehend bereits angesprochene lastabhängige Auslenkung der Verbindungshebel 58 durch das zu übertragende statische Drehmoment bzw. auch Gesamtdrehmoment wird des Weiteren erreicht, dass lastabhängig die effektiven Hebellängen und damit das Übersetzungsverhältnis der Koppelhebelanordnung 18 sich ändern. Dies hat zur Folge, dass gleichermaßen lastabhängig sich die Aufteilung der in die beiden Drehmomentübertragungswege 14, 16 eingeleiteten Drehmomentenanteile verändert, so dass in vorteilhafter Weise die Schwingungsdämpfungscharakteristik der erfindungsgemäßen Drehschwingungsdämpfungsanordnung 10 sich an das zu übertragende Drehmoment anpasst.

Eine weitere Möglichkeit zur Anpassung des Dämpfungsverhaltens an den Lastzustand ist in den Fig. 7 bis 9 dargestellt. Man erkennt, dass die Abtriebshebel 68 bei dieser Ausgestaltung mit ihrem zweiten Abtriebshebelkopplungsbereich 76 an ein Kopplungselement 78 des jeweiligen Verbindungshebels 58 schwenkbar angekoppelt sind. Das Kopplungselement 78 ist in einer Aussparung des Verbindungshebels 58 in Richtung zwischen dem ersten Verbindungshebelkopplungsbereich 60 und dem zweiten Verbindungshebelkopplungsbereich 62 verlagerbar. Eine Vorspannfeder 80, welche sich nahe dem zweiten Verbindungshebelkopplungsbereich 62 am Verbindungshebel 58 abstützt, spannt das Kopplungselement 78 in Richtung zu einer Anlage 82 nahe dem ersten Verbindungshebelkopplungsbereich 60, also in Richtung auf den ersten Verbindungshebelkopplungsbereich 60 zu, vor. Dies bedeutet, dass grundsätzlich der dritte Verbindungshebelkopplungsbereich 66 zwischen dem ersten Verbindungshebelkopplungsbereich 60 und dem zweiten Verbindungshebelkopplungsbereich 62 bewegbar ist, jedoch in Richtung auf den ersten Verbindungshebelkopplungsbereich 60 zu vorgespannt ist.

Lastabhängig und ggf. auch drehzahlabhängig kann sich dabei das Kopplungselement 78 gegen die Vorspannwirkung der Vorspannfeder 80 in Richtung vom ersten Verbindungshebelkopplungsbereich 60 weg auf den zweiten Verbindungshebelkopplungsbereich 62 zu verschieben, wodurch auch die effektive Hebellänge des Verbindungshebels 58 zwischen dem ersten Verbindungshebelkopplungsbereich 60 und dem dritten Verbindungshebelkopplungsbereich 66 zunimmt. Somit wird eine Veränderung des Übertragungsverhältnisses der Koppelhebelanordnung 18 und damit eine Variation der Dämpfungscharakteristik der Drehschwingungsdämpfungsanordnung 10 erzeugt.

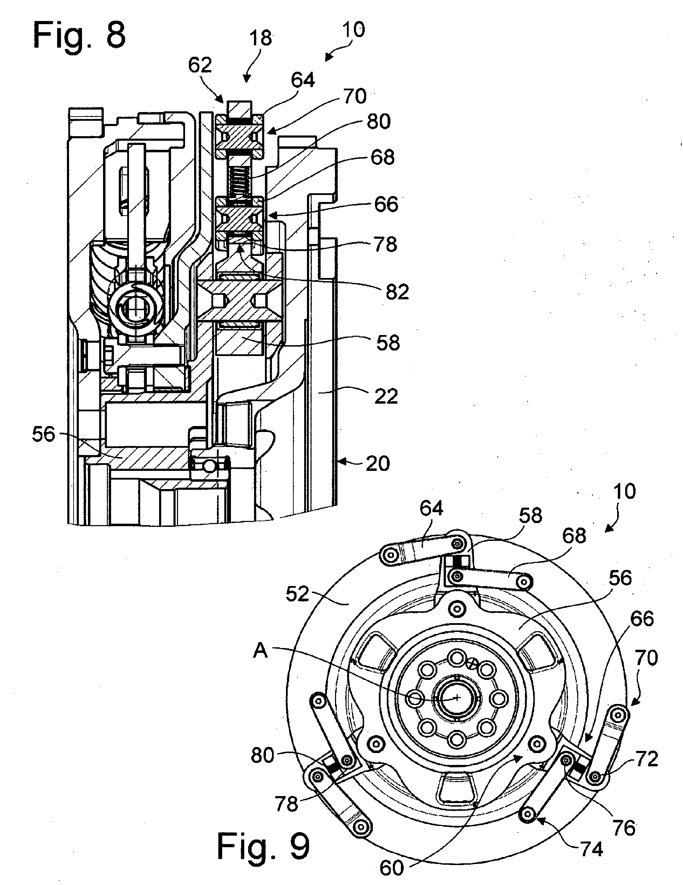

Wie die Fig. 9 erkennen lässt, wird dabei die Variation der effektiven Hebellängen nicht nur lastabhängig, sondern auch drehzahlabhängig ermöglicht. Durch die im Rotationsbetrieb auftretende Fliehkraft kann, je nach Vorspannwirkung der zugeordneten Vorspannfeder 80, ein jeweiliges Kopplungselement 78 zusammen mit dem daran schwenkbar getragenen dritten Verbindungshebelkopplungsbereich 66 sich radial verlagern, wodurch drehzahlabhängig, nämlich mit zunehmender Drehzahl ansteigend, der Radialabstand zwischen einem jeweiligen ersten Verbindungshebelkopplungsbereich 60 und dritten Verbindungshebelkopplungsbereich 66 variiert.

Durch die last- bzw. drehzahlabhängig hervorgerufene bzw. ermöglichte Verlagerung des Kopplungselements 78 nach radial außen nähert sich der dritte Verbindungshebelkopplungsbereich 66 dem zweiten Verbindungshebelkopplungsbereich 62 an, was zu einer Annäherung des Übersetzungsverhältnisses an den Wert 1 führt. Ist im lastfreien Zustand eine Anordnung gewählt, bei welcher das Übersetzungsverhältnis größer als 1 ist, also der größere Drehmomentenanteil über den ersten Drehmomentübertragungsweg 14 geleitet wird, so führt die last- bzw. drehzahlabhängige Verlagerung des dritten Verbindungshebelkopplungsbereichs 66 zu einer Abnahme des Übersetzungsverhältnisses und somit einer Annäherung an den Wert 1. Auch dies bedingt eine Zunahme des über den ersten Drehmomentübertragungsweg 14 geleiteten Drehmomentenanteils, wodurch die Dämpfungsfunktionalität des Schwingungssystems 24 im Zustand höherer Last bzw. höherer Drehzahl wieder verstärkt genutzt werden kann. Der Effekt der entgegen der Federvorspannung erfolgenden Annäherung des dritten Verbindungshebelkopplungsbereichs 66 an den zweiten Verbindungshebelkopplungsbereich 62 kann der durch die Verschwenkung der Verbindungshebel 58 im Lastzustand hervorgerufenen Veränderung des Übersetzungsverhältnisses überlagert sein, so dass eine noch bessere Anpassung an verschiedene Last- bzw. Drehzahlzustände erreichbar ist.

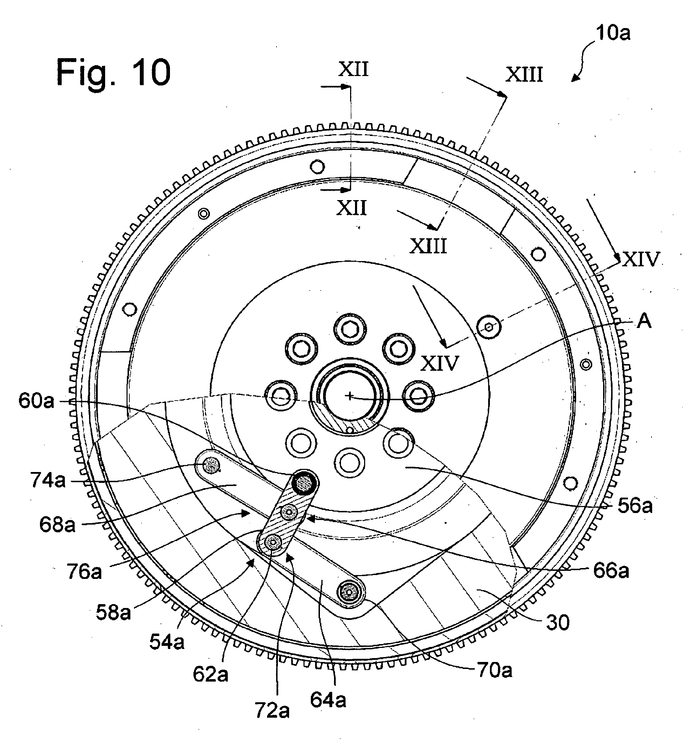

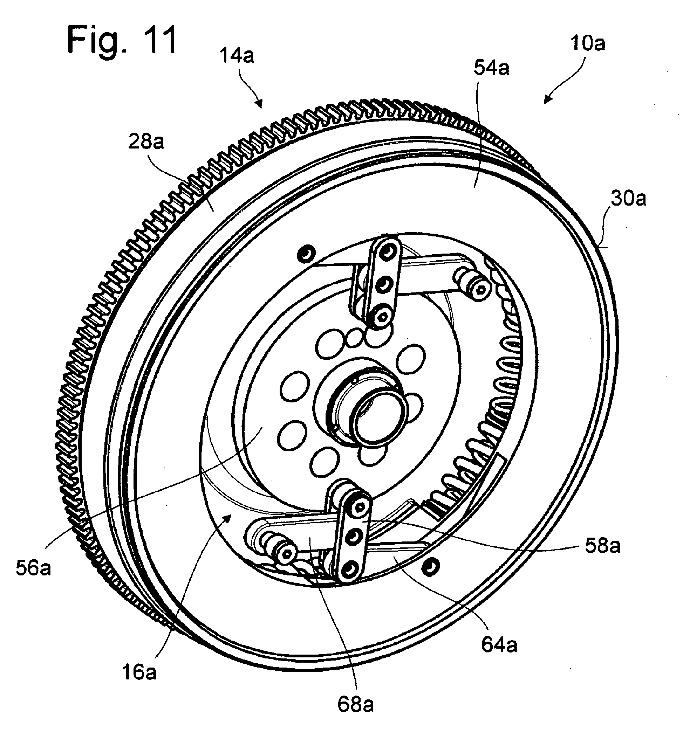

Mit Bezug auf die Fig. 10 bis 16 wird im Folgenden eine alternative Ausgestaltungsform einer erfindungsgemäß aufgebauten Drehschwingungsdämpfungsanordnung beschrieben. Komponenten, welche vorangehend beschriebenen Komponenten hinsichtlich Funktion bzw. Aufbau entsprechen, sind mit dem gleichen Bezugszeichen unter Hinzufügung eines Anhangs "a" bezeichnet.

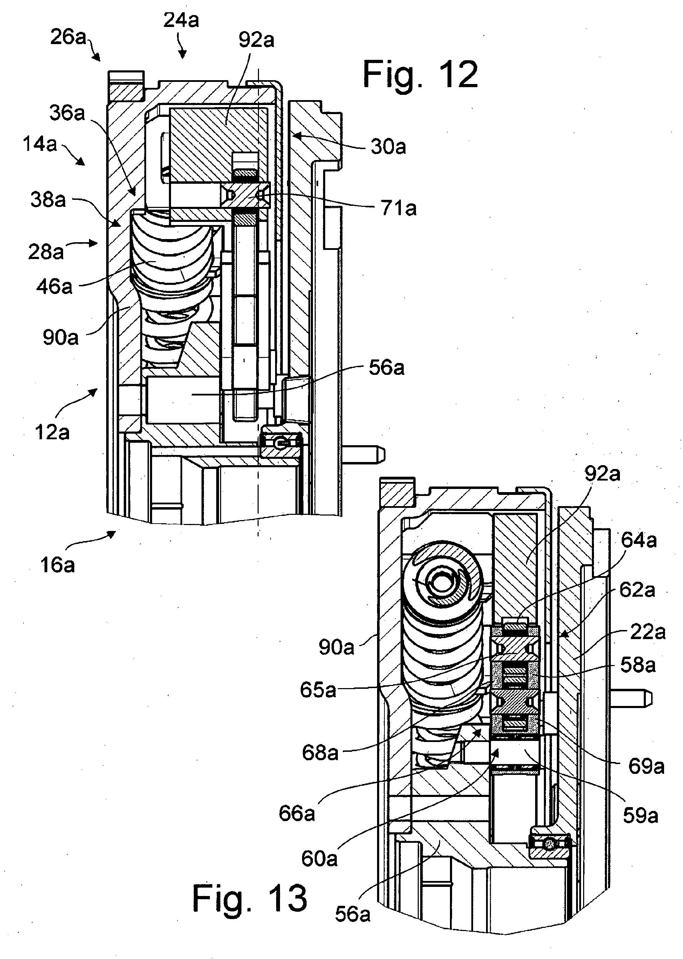

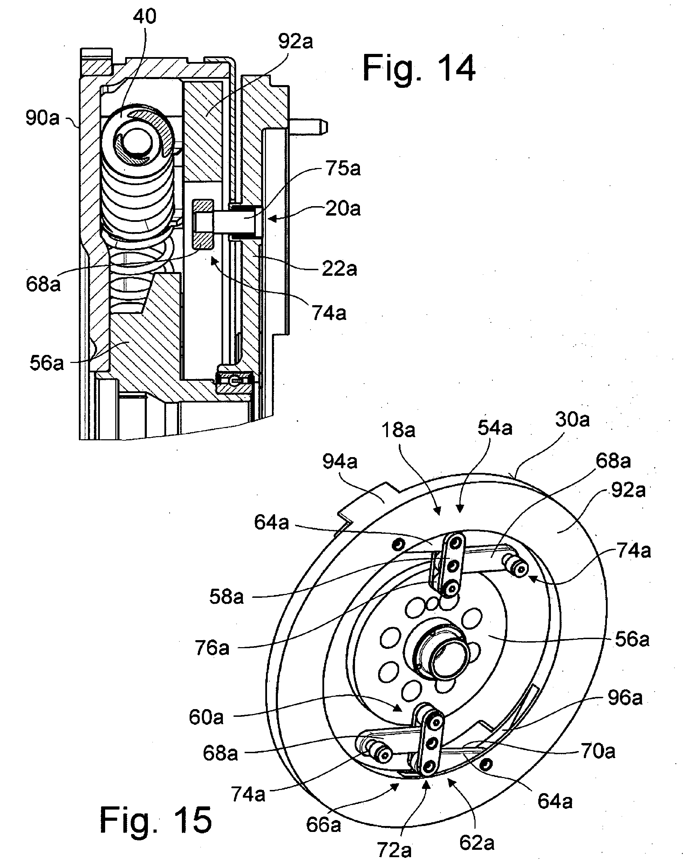

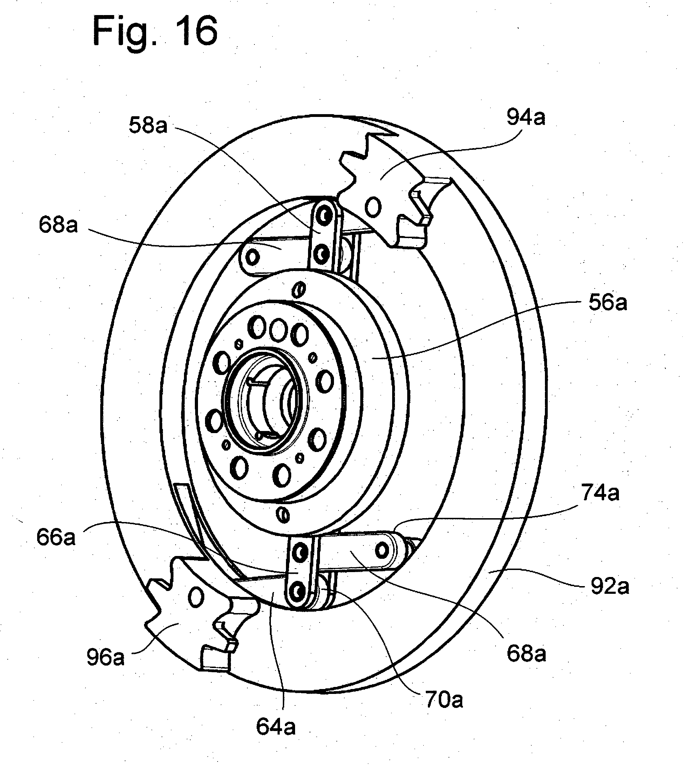

Bei dieser Ausgestaltungsform ist ein konstruktiver Unterschied primär in der Ausgestaltung des als Phasenschieberanordnung 26a wirksamen Schwingungssystems 24a vorhanden. Wie beispielsweise die Fig. 12 bis 14 zeigen, umfasst die Primärseite 28a des Schwingungssystems ein Scheibenelement 90a, welches in seinem radial inneren Bereich zusammen mit dem Verbindungshebelträger 56a durch Schraubbolzen oder dergleichen an einer Antriebswelle, beispielsweise Kurbelwelle, festzulegen ist. Die Sekundärseite 30a umfasst ein weiteres, ringscheibenartig ausgebildetes Bauteil 92a, welches dem Scheibenelement 90a der Primärseite 28a axial gegenüberliegt. Das Scheibenelement 90a und das Bauteil 92a weisen einander zugeordnete bzw. komplementäre Umfangsabstützbereiche für die Federeinheiten 46a des Federsatzes 36a der Federanordnung 38a auf. Es sei hier darauf hingewiesen, dass bei dieser Ausgestaltungsform das Schwingungssystem nur einen Schwingungssystembereich, also einen Federsatz 36a, aufweist und insofern der zweite Federsatz und auch die Zwischenmasse, welche bei der vorangehend beschriebenen Ausgestaltungsform vorhanden sind, hier fehlen. Die Umfangsabstützbereiche 94a, 96a des sekundärseitigen Bauteils 92a sind in den Fig. 15, 16 deutlich zu erkennen.

Die Antriebshebel 64a der hier zwei Verbindungshebel 58a umfassenden Koppelhebelanordnung 54a sind in ihren ersten Antriebshebelkopplungsbereichen 70a mit dem sekundärseitigen Bauteil 92a in jeweiligen Aussparungen 96a vermittels der Schwenkbolzen 71 a schwenkbar gekoppelt. Die mit zwei in Abstand liegenden Scheibenteilen ausgebildeten Verbindungshebel 58a sind in ihrem radial innen liegenden ersten Verbindungshebelkopplungsbereich 60a mit dem Verbindungshebelträger 56a vermittels der Schwenkbolzen 59a schwenkbar gekoppelt und tragen in ihrem radial außen liegend positionierten zweiten Verbindungshebelkopplungsbereich 62a die zweiten Antriebshebelkopplungsbereiche 72a schwenkbar. Dazwischen liegen die dritten Verbindungshebelkopplungsbereiche 66a, an welchen wiederum die Abtriebshebel 68a mit ihrem jeweiligen zweiten Abtriebshebelkopplungsbereich 76a schwenkbar angekoppelt sind.

Die Funktionscharakteristik dieser Ausgestaltungsform der Drehschwingungsdämpfungsanordnung 10 hinsichtlich der Aufteilung und Überlagerung der Drehmomentenanteile entspricht der vorangehend mit Bezug auf die Fig. 1 bis 9 beschriebenen Ausgestaltungsform, so dass auf diese Ausführungen verwiesen werden kann.

Ist das Schwingungssystem 24a mit nur einem Federsatz 36a ausgebildet, wie dies in den Fig. 10 bis 16 dargestellt ist, so besteht grundsätzlich die Möglichkeit, den einzigen Federsatz entweder vergleichsweise weiter radial außen oder weiter radial innen anzuordnen. Die Anordnung weiter radial außen ermöglicht ein größeres Federvolumen, beansprucht jedoch auch mehr Bauraum für die Federeinheiten 40 des Federsatzes 36a. Die Positionierung radial außen ermöglicht es auch, das abtriebsseitige Bauteil 92a nicht so zu positionieren, dass es auch hinsichtlich der Abstützfunktionalität dem Scheibenelement 90a der Primärseite 28a axial gegenüberliegt, sondern beispielsweise radial innerhalb der Federeinheiten 40a positioniert ist und nach radial außen greifende Abstützbereiche aufweist. Dies führt jedoch zu einer Verringerung des sekundärseitigen Massenträgheitsmoments, was ggf. durch eine zusätzliche an die Sekundärseite 30a anzubindende Masse zu kompensieren ist. Bei weiter radial innen liegenden Federeinheiten 40a wird bedingt dadurch, dass die auf die Federeinheiten 40a einwirkenden Fliehkräfte entsprechend geringer sein werden, auch eine geringere Reibkraft, was zu einer besseren Entkopplungsgüte und somit einem stärker ausgeprägten Übergang in den überkritischen Zustand mit einer Phasenverschiebung von bis zu 180° führen kann. Dieser Übergang wird nach Durchlaufen der Resonanzfrequenz schneller erreicht. Die Positionierung der Federeinheiten 40a weiter radial innen ermöglicht es, die Koppelhebelanordnung 56a radial außerhalb des Federsatzes 36a und sich mit diesem beispielsweise im Wesentlichen vollständig axial überlappend anzuordnen, was zu einer vergleichsweise kurzen axialen Baugröße beitragen kann.

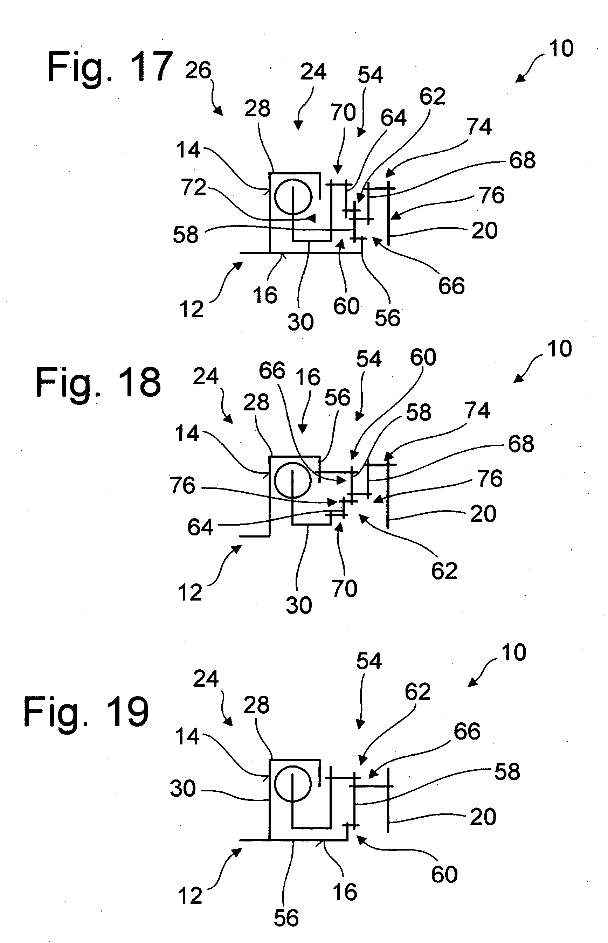

Mit Bezug auf die Fig. 17 bis 19 werden nachfolgend noch verschiedene grundsätzliche Variationsmöglichkeiten insbesondere im Aufbau der Koppelhebelanordnung 54 beschrieben. Dabei zeigt die Fig. 17 den vorangehend mit Bezug auf die Fig. 1 bis 16 grundsätzlich beschriebenen Aufbau, bei welchem die Antriebshebel 64 mit ihrem ersten Antriebshebelkopplungsbereich 70 an der Sekundärseite 30 des Schwingungssystems 24 angelenkt sind und die Verbindungshebel 58 mit ihrem ersten Verbindungshebelkupplungsbereich an einem im Wesentlichen auch radial innerhalb des Schwingungssystems 28 sich erstreckenden Kopplungshebelträger 56 getragen sind.

Eine Variation ist in Fig. 18 dargestellt. Man erkennt hier, dass die Primärseite 28 beispielsweise mit einem Deckscheibenelement oder dergleichen den Verbindungshebelträger 56 bereitstellt. In diesem Bereich findet dann tatsächlich eine Aufzweigung in den ersten Drehmomentübertragungsweg 14, welcher über die Federeinheiten der bzw. des Federsatzes zur Sekundärseite 30 führt, und den zweiten Drehmomentübertragungsweg 16 statt, welcher über die Verbindungshebel 58 zum Ausgangsbereich 20 führt. Diese Verbindungshebel 58 sind mit ihrem ersten Verbindungshebelkopplungsbereich 60 an den Verbindungshebelträger 56, also beispielsweise die Primärseite 28, angelenkt. Die Antriebshebel 64 sind mit ihrem ersten Antriebshebelkopplungsbereich 70 an die Sekundärseite 30 angelenkt. Hier könnte grundsätzlich auch die Anordnung derart sein, dass die Verbindungshebel 58 sich ausgehend von ihrem ersten Verbindungshebelkopplungsbereich 60 nach radial innen erstrecken und mit ihrem zweiten Verbindungshebelkopplungsbereich 62 dann radial innerhalb ihres dritten Verbindungshebelkopplungsbereichs 66 positioniert sind.

Eine weitere Variation ist in Fig. 19 dargestellt. Man erkennt hier, dass die Koppelhebelanordnung 54 nur die Verbindungshebel 58 umfasst. Diese sind in ihrem ersten Verbindungshebelkopplungsbereich 60 am Verbindungshebelträger 56 schwenkbar getragen, wobei dieser auch so wie in Fig. 18 dargestellt ausgeführt sein könnte. Mit ihrem zweiten Verbindungshebelkopplungsbereich 62 sind die Verbindungshebel 58 ohne der Zwischenpositionierung von Antriebshebeln direkt an die Sekundärseite 30 des Schwingungssystems 24 schwenkbar angekoppelt. Mit ihrem dritten Verbindungshebelkopplungsbereich 66 sind die Verbindungshebel 58 ohne Zwischenlagerung von Abtriebshebeln direkt an den Ausgangsbereich 20 schwenkbar angekoppelt. Um dabei die im Lastzustand bzw. Oszillationszustand erforderliche Änderung des Abstands zwischen dem ersten Verbindungshebelkopplungsbereich 60 und dem zweiten Verbindungshebelkopplungsbereich 62 sowie dem dritten Verbindungshebelkopplungsbereich 66 zu ermöglichen, kann die schwenkbare Verbindung zur Sekundärseite 30 bzw. zum Ausgangsbereich 20 in Form eines in einem Langloch im Verbindungshebel 58 oder/und der Sekundärseite 30 bzw. im Ausgangsbereich 20 verschiebbaren Kopplungsbolzens realisiert sein. Hier ist zu berücksichtigen, dass bei Verschwenkung der Verbindungshebel 58 der Radialabstand der jeweiligen Verbindungshebelkopplungsbereiche zur Drehachse A unverändert bleibt, Umfangsabstand der Verbindungshebelkopplungsbereiche varüeren können muss. Grundsätzlich kann diese Verschiebbarkeit bzw. Bewegbarkeit der Verbindungshebelkopplungsbereiche, so wie in Fig. 7 dargestellt, auch gegen die Vorspannwirkung einer Vorspannfeder oder dergleichen erfolgen. Weiter sei darauf hingewiesen, dass bei dem in Fig. 19 veranschaulichten Prinzip selbstverständlich im Vergleich zu den vorangehend beschriebenen Ausgestaltungsformen auch nur die Abtriebshebel oder nur die Antriebshebel weggelassen sein können.

Abschließend sei darauf hingewiesen, dass bei dem vorangehend beschriebenen Aufbau verschiedenste Variationen vorgenommen werden können, ohne von den Prinzipien der vorliegenden Erfindung abzuweichen. So kann selbstverständlich die Anzahl der bei der Koppelhebelanordnung vorgesehenen Verbindungshebel auch abhängig von den im Lastzustand auftretenden Drehmomenten variiert werden. Auch die Ausgestaltung der Verbindungshebel bzw. Abtriebshebel als gabelartig oder mit mehreren Scheibenteilen oder dergleichen kann abhängig von den zu erwartenden Lasten gewählt werden. Auch ist es selbstverständlich, dass im Bereich des Schwingungssystems verschiedenste Variationen möglich sind, welche beispielsweise auch aus dem Bereich von Torsionsschwingungsdämpfern, wie in Zweimassenschwungrädern, hydrodynamischen Drehmomentwandlern oder dergleichen, bekannt sind. Wie vorangehend dargestellt, kann das Schwingungssystem mehrstufig, also mit mehreren seriell wirksamen Schwingungssystembereichen ausgebildet sein, wie in den Fig. 1 bis 9 dargestellt, oder einstufig, also mit nur einem Schwingungssystembereich, wie in den Fig. 10 bis 16 dargestellt. Selbstverständlich können dem Schwingungssystem, sofern dies erforderlich oder vorteilhaft ist, Reibmechanismen zugeordnet werden, um beispielsweise auch lastabhängig Reibeffekte zu erzeugen. Auch ist es grundsätzlich möglich, in den zweiten Drehmomentübertragungsweg ein Schwingungssystem zu integrieren, dessen Eigenfrequenz jedoch nicht der Eigenfrequenz des Schwingungssystems im ersten Drehmomentübertragungsweg entsprechen sollte, so dass ein Übergang in den überkritischen Zustand bei unterschiedlichen Drehzahlen auftritt. Somit wird es möglich, verschiedene Bereiche verschiedener Phasenverschiebung zu definieren, wodurch die Dämpfungscharakteristik weiter beeinflussbar ist.

## Patentansprüche

1. Drehschwingungsdämpfungsanordnung, insbesondere für den Antriebsstrang eines Fahrzeugs, umfassend einen zur Drehung um eine Drehachse (A) anzutreibenden Eingangsbereich (12; 12a) und einen Ausgangsbereich (20; 20a), wobei zwischen dem Eingangsbereich (12; 12a) und dem Ausgangsbereich (20; 20a) ein erster Drehmomentübertragungsweg (14; 14a) und parallel dazu ein zweiter Drehmomentübertragungsweg (16; 16a) sowie eine Koppelanordnung (18; 18a) zur Überlagerung der über die Drehmomentübertragungswege (14, 16; 14a, 16a) geleiteten Drehmomente vorgesehen sind, wobei im ersten Drehmomentübertragungsweg (14; 14a) eine Phasenschieberanordnung (26; 26a) zur Erzeugung einer Phasenverschiebung von über den ersten Drehmomentübertragungsweg (14; 14a) geleiteten Drehungleichförmigkeiten bezüglich über den zweiten Drehmomentübertragungsweg (16; 16a) geleiteten Drehungleichförmigkeiten vorgesehen ist, wobei die Koppelanordnung (18; 18a) eine Koppelhebelanordnung (54; 54a), die eine Zusammenführung der über die beiden Drehmomentübertragungswege (14, 16; 14a, 16a) geleiteten Drehmomentanteile realisiert, umfasst.

2. Drehschwingungsdämpfungsanordnung nach Anspruch 1, **dadurch gekennzeichnet, dass** die Phasenschieberanordnung (26; 26a) ein Schwingungssystem (24; 24a) mit einer Primärseite (28; 28a) und einer gegen die Wirkung einer Federanordnung (38; 38a) bezüglich der Primärseite (28; 28a) um die Drehachse (A) drehbaren Sekundärseite (30; 30a) umfasst.

3. Drehschwingungsdämpfungsanordnung nach Anspruch 1 oder Anspruch 2, **dadurch gekennzeichnet, dass** die Koppelhebelanordnung (54; 54a) einen Verbindungshebelträger (56; 56a) umfasst, wobei wenigstens ein Verbindungshebel (58; 58a) in einem ersten Verbindungshebelkopplungsbereich (60; 60a) mit dem Verbindungshebelträger (56; 56a) schwenkbar gekoppelt ist.

4. Drehschwingungsdämpfungsanordnung nach Anspruch 2 und Anspruch 3, **dadurch gekennzeichnet, dass** wenigstens ein Verbindungshebel (58; 58a) in einem zweiten Verbindungshebelkopplungsbereich (62; 62a) an die Sekundärseite (30; 30a) des Schwingungssystems (26; 26a) bezüglich dieser schwenkbar angekoppelt ist und in einem dritten Verbindungshebelkopplungsbereich (66; 66a) an den Ausgangsbereich (20; 20a) bezüglich diesem schwenkbar angekoppelt ist.

5. Drehschwingungsdämpfungsanordnung nach Anspruch 4, **dadurch gekennzeichnet, dass** wenigstens ein Antriebshebel (64; 64a) in einem ersten Antriebshebelkopplungsbereich (70; 70a) mit der Sekundärseite (30; 30a) des Schwingungssystems (26; 26a) schwenkbar gekoppelt ist und in einem zweiten Antriebshebelkopplungsbereich (72; 72a) mit einem Verbindungshebel (58; 58a) in dessen zweiten Verbindungshebelkopplungsbereich (62; 62a) schwenkbar gekoppelt ist.

6. Drehschwingungsdämpfungsanordnung nach Anspruch 4 oder 5, **dadurch gekennzeichnet, dass** wenigstens ein Abtriebshebel (68; 68a) in einem ersten Abtriebshebelkopplungsbereich (74; 74a) mit dem Ausgangsbereich (20; 20a) schwenkbar gekoppelt ist und in einem zweiten Abtriebshebelkopplungsbereich (76; 76a) mit einem Verbindungshebel (58; 58a) in dessen dritten Verbindungshebelkopplungsbereich (66; 66a) schwenkbar gekoppelt ist.

7. Drehschwingungsdämpfungsanordnung nach Anspruch 4, 5 oder 6, **dadurch gekennzeichnet, dass** bei wenigstens einem Verbindungshebel (58; 58a) der zweiter Verbindungshebelkopplungsbereich (62; 62a) und der dritte Verbindungshebelkopplungsbereich (66; 66a) zueinander unterschiedliche Abstände zum ersten Verbindungshebelkopplungsbereich (60; 60a) aufweisen.

8. Drehschwingungsdämpfungsanordnung nach Anspruch 7, **dadurch gekennzeichnet, dass** der Abstand des zweiten Verbindungshebelkopplungsbereichs (62; 62a) zum ersten Verbindungshebelkopplungsbereich (60; 60a) größer ist als der Abstand des dritten Verbindungshebelkopplungsbereichs (66; 66a) zum ersten Verbindungshebelkopplungsbereich (60; 60a).

9. Drehschwingungsdämpfungsanordnung nach einem der Ansprüche 4 bis 7, **dadurch gekennzeichnet, dass** bei wenigstens einem Verbindungshebel (58) ein zweiter Verbindungshebelkopplungsbereich (62) oder/und ein dritter Verbindungshebelkopplungsbereich (66) vorzugsweise gegen eine Vorspannkraft (80) in Richtung auf den ersten Verbindungshebelkopplungsbereich (60) zu oder/und von dem ersten Verbindungshebelkopplungsbereich (60) weg bewegbar ist.

10. Drehschwingungsdämpfungsanordnung nach Anspruch 2 oder einem der Ansprüche 3 bis 9, sofern auf Anspruch 2 rückbezogen, **dadurch gekennzeichnet, dass** die Koppelhebelanordnung (54; 54a) wenigstens bereichsweise radial außerhalb oder innerhalb der Federanordnung (38; 38a) angeordnet ist oder/und sich wenigstens teilweise mit der Federanordnung axial überlappend angeordnet ist.

11. Drehschwingungsdämpfungsanordnung nach Anspruch 2 oder einem der Ansprüche 3 bis 10, sofern auf Anspruch 2 rückbezogen, **dadurch gekennzeichnet, dass** die Federanordnung (38) einen ersten Federsatz (36) mit in Umfangsrichtung aufeinander folgend angeordneten und bezüglich der Primärseite (38) und einer Zwischenmasse (42) abstützbaren Federeinheiten (40) und einen zweiten Federsatz (44) mit in Umfangsrichtung aufeinander folgenden und bezüglich der Zwischenmasse (42) und der Sekundärseite (30) abstützbaren Federeinheiten (46) umfasst.

12. Drehschwingungsdämpfungsanordnung nach Anspruch 11, **dadurch gekennzeichnet, dass** der erste Federsatz (36) radial außerhalb des zweiten Federsatzes (44) angeordnet ist oder/und sich mit dem zweiten Federsatz (44) in axialer Richtung wenigstens teilweise überlappend angeordnet ist.

13. Drehschwingungsdämpfungsanordnung nach Anspruch 2 oder einem der Ansprüche 3 bis 10, sofern auf Anspruch 2 rückbezogen, **dadurch gekennzeichnet, dass** die Federanordnung (38) einen Federsatz (36) mit in Umfangsrichtung aufeinander folgenden und bezüglich der Primärseite (28) und der Sekundärseite (30) abstützbaren Federeinheiten (40) umfasst.

## Claims

1. Torsional vibration damping arrangement, in particular for the drive train of a vehicle, comprising an input region (12; 12a) to be driven rotationally about a rotational axis (A) and an output region (20; 20a), a first torque transmission path (14; 14a) being provided between the input region (12; 12a) and the output region (20; 20a), and a second torque transmission path (16; 16a) being arranged parallel thereto, and a coupling arrangement (18; 18a) being provided for superimposing the torques which are conducted via the torque transmission paths (14, 16; 14a, 16a), a phase shift arrangement (26; 26a) being provided in the first torque transmission path (14; 14a) in order to generate a phase shift of rotational irregularities which are conducted via the first torque transmission path (14; 14a) with regard to rotational irregularities which are conducted via the second torque transmission path (16; 16a), the coupling arrangement (18; 18a) comprising a coupling lever arrangement (54; 54a) which realizes a combination of the torque components which are conducted via the two torque transmission paths (14, 16; 14a, 16a).

2. Torsional vibration damping arrangement according to Claim 1, **characterized in that** the phase shift arrangement (26; 26a) comprises a vibration system (24; 24a) with a primary side (28; 28a) and a secondary side (30; 30a) which can be rotated about the rotational axis (A) with regard to the primary side (28; 28a) counter to the action of a spring arrangement (38; 38a).

3. Torsional vibration damping arrangement according to Claim 1 or Claim 2, **characterized in that** the coupling lever arrangement (54; 54a) comprises a connecting lever carrier (56; 56a), at least one connecting lever (58; 58a) being coupled pivotably to the connecting lever carrier (56; 56a) in a first connecting lever coupling region (60; 60a).

4. Torsional vibration damping arrangement according to Claim 2 and Claim 3, **characterized in that** at least one connecting lever (58; 58a) is coupled to the secondary side (30; 30a) of the vibration system (26; 26a) such that it can be pivoted with regard to the latter in a second connecting lever coupling region (62; 62a) and is coupled to the output region (20; 20a) such that it can be pivoted with regard to the latter in a third connecting lever coupling region (66; 66a).

5. Torsional vibration damping arrangement according to Claim 4, **characterized in that** at least one drive lever (64; 64a) is coupled pivotably to the secondary side (30; 30a) of the vibration system (26; 26a) in a first drive lever coupling region (70; 70a) and is coupled pivotably to a connecting lever (58; 58a) in its second connecting lever coupling region (62; 62a) in a second drive lever coupling region (72; 72a).

6. Torsional vibration damping arrangement according to Claim 4 or 5, **characterized in that** at least one output lever (68; 68a) is coupled pivotably to the output region (20; 20a) in a first output lever coupling region (74; 74a) and is coupled pivotably to a connecting lever (58; 58a) in its third connecting lever coupling region (66; 66a) in a second output lever coupling region (76; 76a).

7. Torsional vibration damping arrangement according to Claim 4, 5 or 6, **characterized in that**, in the case of at least one connecting lever (58; 58a), the second connecting lever coupling region (62; 62a) and the third connecting lever coupling region (66; 66a) are at mutually different spacings from the first connecting lever coupling region (60; 60a).

8. Torsional vibration damping arrangement according to Claim 7, **characterized in that** the spacing of the second connecting lever coupling region (62; 62a) from the first connecting lever coupling region (60; 60a) is greater than the spacing of the third connecting lever coupling region (66; 66a) from the first connecting lever coupling region (60; 60a).

9. Torsional vibration damping arrangement according to one of Claims 4 to 7, **characterized in that**, in the case of at least one connecting lever (58), a second connecting lever coupling region (62) and/or a third connecting lever coupling region (66) can preferably be moved counter to a prestressing force (80) in the direction towards the first connecting lever coupling region (60) and/or away from the first connecting lever coupling region (60).

10. Torsional vibration damping arrangement according to Claim 2 or one of Claims 3 to 9, if referring back to Claim 2, **characterized in that** the coupling lever arrangement (54; 54a) is arranged at least in regions radially outside or inside the spring arrangement (38; 38a) and/or is arranged so as to axially overlap with the spring arrangement at least partially.

11. Torsional vibration damping arrangement according to Claim 2 or one of Claims 3 to 10, if referring back to Claim 2, **characterized in that** the spring arrangement (38) comprises a first spring set (36) with spring units (40) which are arranged so as to follow one another in the circumferential direction and can be supported with regard to the primary side (38) and an intermediate mass (42) and a second spring set (44) with spring units (46) which follow one another in the circumferential direction and can be supported with regard to the intermediate mass (42) and the secondary side (30).

12. Torsional vibration damping arrangement according to Claim 11, **characterized in that** the first spring set (36) is arranged radially outside the second spring set (44) and/or is arranged so as to overlap at least partially in the axial direction with the second spring set (44).

13. Torsional vibration damping arrangement according to Claim 2 or one of Claims 3 to 10, if referring back to Claim 2, **characterized in that** the spring arrangement (38) comprises a spring set (36) with spring units (40) which follow one another in the circumferential direction and can be supported with regard to the primary side (28) and the secondary side (30).

## Revendications

1. Ensemble amortisseur de vibrations torsionnelles, en particulier pour la chaîne cinématique d'un véhicule, comprenant une région d'entrée (12; 12a) à entraîner en rotation autour d'un axe de rotation (A) et une région de sortie (20; 20a), dans lequel il est prévu entre la région d'entrée (12; 12a) et la région de sortie (20; 20a) un premier chemin de transmission de couple de rotation (14; 14a) et parallèlement à celui-ci un deuxième chemin de transmission de couple de rotation (16; 16a) ainsi qu'un dispositif de couplage (18; 18a) pour la superposition des couples de rotation transmis par les chemins de transmission de couple de rotation (14, 16; 14a, 16a), dans lequel il est prévu, dans le premier chemin de transmission de couple de rotation (14 ; 14a), un ensemble de déphasage (26; 26a) pour la production d'un déphasage d'irrégularités de rotation transmises par le premier chemin de transmission de couple de rotation (14; 14a) par rapport à des irrégularités de rotation transmises par le deuxième chemin de transmission de couple de rotation (16; 16a), dans lequel le dispositif de couplage (18; 18a) comprend un ensemble de leviers de couplage (54; 54a), qui réalise une réunion des parties de couple de rotation transmises par les deux chemins de transmission de couple de rotation (14, 16; 14a, 16a).

2. Ensemble amortisseur de vibrations torsionnelles selon la revendication 1, **caractérisé en ce que** l'ensemble de déphasage (26; 26a) comprend un système de vibration (24; 24a) avec un côté primaire (28; 28a) et un côté secondaire (30; 30a) tournant autour de l'axe de rotation (A) par rapport au côté primaire (28; 28a) contre l'action d'un ensemble de ressort (38; 38a).

3. Ensemble amortisseur de vibrations torsionnelles selon la revendication 1 ou la revendication 2, **caractérisé en ce que** l'ensemble de leviers de couplage (54; 54a) comprend un support de leviers de liaison (56; 56a), dans lequel au moins un levier de liaison (58; 58a) est couplé de façon pivotante au support de leviers de liaison (56; 56a) dans une première région de couplage de leviers de liaison (60; 60a).

4. Ensemble amortisseur de vibrations torsionnelles selon la revendication 2 et la revendication 3, **caractérisé en ce qu'**au moins un levier de liaison (58; 58a) est couplé au côté secondaire (30; 30a) du système de vibrations (26; 26a) de façon pivotante par rapport à celui-ci dans une deuxième région de couplage de leviers de liaison (62; 62a) et est couplé dans une troisième région de couplage de levier de liaison (66; 66a) à la région de sortie (20; 20a) de façon pivotante par rapport à celle-ci.

5. Ensemble amortisseur de vibrations torsionnelles selon la revendication 4, **caractérisé en ce qu'**au moins un levier d'entraînement (64; 64a) est couplé de façon pivotante au côté secondaire (30; 30a) du système de vibrations (26; 26a) dans une première région de couplage de levier d'entraînement (70; 70a) et est couplé dans une deuxième région de couplage de levier d'entraînement (72; 72a) de façon pivotante à un levier de liaison (58; 58a) dans la deuxième région de couplage de levier de liaison (62; 62a) de celui-ci.

6. Ensemble amortisseur de vibrations torsionnelles selon la revendication 4 ou 5, **caractérisé en ce qu'**au moins un levier de commande (68; 68a) est couplé de façon pivotante à la région de sortie (20; 20a) dans une première région de couplage de levier de commande (74; 74a) et est couplé dans une deuxième région de couplage de levier de commande (76; 76a) de façon pivotante à un levier de liaison (58; 58a) dans une troisième région de couplage de levier de liaison (66; 66a) de celui-ci.

7. Ensemble amortisseur de vibrations torsionnelles selon la revendication 4, 5 ou 6 **caractérisé en ce que**, pour au moins un levier de liaison (58; 58a), la deuxième région de couplage de levier de liaison (62; 62a) et la troisième région de couplage de levier de liaison (66; 66a) présentent des distances différentes l'une de l'autre par rapport à la première région de couplage de levier de liaison (60; 60a).

8. Ensemble amortisseur de vibrations torsionnelles selon la revendication 7, **caractérisé en ce que** la distance entre la deuxième région de couplage de levier de liaison (62; 62a) et la première région de couplage de levier de liaison (60; 60a) est plus grande que la distance entre la troisième région de couplage de levier de liaison (66; 66a) et la première région de couplage de levier de liaison (60; 60a).

9. Ensemble amortisseur de vibrations torsionnelles selon l'une quelconque des revendications 4 à 7, **caractérisé en ce que**, pour au moins un levier de liaison (58), une deuxième région de couplage de levier de liaison (62) ou/et une troisième région de couplage de levier de liaison (66) est déplaçable de préférence contre une force de précontrainte (80) en direction de la première région de couplage de levier de liaison (60) ou/et en s'écartant de la première région de couplage de levier de liaison (60).

10. Ensemble amortisseur de vibrations torsionnelles selon la revendication 2 ou l'une quelconque des revendications 3 à 9, dans la mesure où elle se rattache à la revendication 2, **caractérisé en ce que** l'ensemble de leviers de couplage (54; 54a) est disposé au moins localement radialement à l'extérieur ou à l'intérieur de l'ensemble de ressort (38; 38a) ou/et est disposé en recouvrement axial au moins partiel avec l'ensemble de ressort.

11. Ensemble amortisseur de vibrations torsionnelles selon la revendication 2 ou l'une quelconque des revendications 3 à 10, dans la mesure où elle se rattache à la revendication 2, **caractérisé en ce que** l'ensemble de ressort (38) comprend un premier jeu de ressorts (36) avec des unités de ressorts (40) disposées l'une à la suite de l'autre en direction périphérique et pouvant s'appuyer par rapport au côté primaire (38) et à une masse intermédiaire (42) et un deuxième jeu de ressorts (44) avec des unités de ressorts (46) se succédant en direction périphérique et pouvant s'appuyer par rapport à la masse intermédiaire (42) et au côté secondaire (30).

12. Ensemble amortisseur de vibrations torsionnelles selon la revendication 11, **caractérisé en ce que** le premier jeu de ressorts (36) est disposé radialement à l'extérieur du deuxième jeu de ressorts (44) ou/et est disposé en recouvrement au moins partiel en direction axiale avec le deuxième jeu de ressorts (44).

13. Ensemble amortisseur de vibrations torsionnelles selon la revendication 2 ou l'une quelconque des revendications 3 à 10, dans la mesure où elle se rattache à la revendication 2, **caractérisé en ce que** l'ensemble de ressort (38) comprend un jeu de ressorts (36) avec des unités de ressorts (40) se succédant en direction périphérique et pouvant s'appuyer par rapport au côté primaire (28) et au côté secondaire (30).
